# FASCICULE DE BREVET EUROPEEN

(11) **EP 3 157 142 B1**
(45) Date de publication et mention de la délivrance du brevet: **28.08.2019**
(21) Numéro de dépôt: 16190727.4
(22) Date de dépôt: 27.09.2016
(51) Int. Cl.: H02K 5/20, H02K 7/14, H02K 11/215, H02K 11/33

(54) **EQUIPEMENT ELECTRIQUE, NOTAMMENT POUR VEHICULE AUTOMOBILE**
ELEKTRISCHE AUSSTATTUNG INSBESONDERE FÜR KRAFTFAHRZEUG
ELECTRICAL SYSTEM, IN PARTICULAR FOR A MOTOR VEHICLE

(30) Priorité: 12.10.2015 FR 1559682
(43) Date de publication de la demande: 19.04.2017
(73) Titulaire: Valeo Systemes de Controle Moteur, 95800 Cergy Saint Christophe (FR)
(72) Inventeur: ASKEUR, Mimoun, 95490 VAUREAL (FR)
(74) Mandataire: Novembre, Christophe Adelphe

(56) Documents cités:
- EP-A1- 2 924 261
- FR-A1- 2 985 107
- US-A1- 2012 031 215
- US-A1- 2014 339 966

## Description

La présente invention concerne un équipement électrique, notamment pour véhicule automobile.

L'invention vise à proposer un équipement électrique amélioré.

Le document D1 US2014339966 divulgue un moteur électrique, dans lequel une unité de commande de moteur est agencée de manière coaxiale avec le moteur électrique. Le document D2 FR2985107 divulgue une machine électrique notamment pour un véhicule automobile ayant un arbre de rotor logé dans un boîtier comportant au moins un panneau de palier pour le montage de l'arbre de rotor et ayant un manchon de palier et/ ou un perçage de palier ainsi qu'une électronique de commande associée au panneau de palier pour gérer la machine électrique. Le document D3 EP2924261 divulgue un compresseur d'alimentation équipé de moteur électrique. Le document D4 US2012031215 divulgue un actionneur comprenant un moteur électrique ayant un stator, un rotor et un arbre d'entraînement faisant saillie à l'intérieur d'un boîtier de transmission. L'actionneur comprend en outre un circuit de commande pour commander le moteur électrique et un dissipateur de chaleur couplé thermiquement de manière conductrice au circuit de commande.

L'invention a ainsi pour objet un équipement électrique, notamment pour véhicule automobile, cet équipement électrique comportant :
- une machine électrique comportant un arbre rotatif,
- une cible montée sur l'arbre rotatif,
- un capteur agencé pour interagir avec la cible notamment pour délivrer une information relative à la position angulaire de l'arbre rotatif,
- une carte électronique portant au moins une unité de traitement de données, le capteur étant monté sur cette carte et relié électriquement à l'unité de traitement.

Grâce à l'invention, il est possible d'avoir un équipement électrique à coût réduit car le capteur est porté par la carte, ce qui évite de prévoir des pièces supplémentaires entre ce capteur et la carte, pièces telles qu'un support du capteur ou un connecteur. Le montage du capteur sur a carte peut être simplifié.

Le capteur n'étant pas déporté sur une pièce mécanique et étant éloigné des champs magnétiques crées au stator et au rotor de la machine, le capteur est moins sensible à ces perturbations magnétiques. Il n'est donc pas nécessaire de rajouter par exemple un blindage sur le câblage qui relie le capteur à la carte de contrôle qui traite le signal issu du capteur.

De préférence la cible magnétique comporte plusieurs secteurs Nord et Sud. Ces secteurs dépendent de la topologie de la machine. Un calage au préalable donne la position du rotor. Ainsi, après ce calage, l'origine de la cible magnétique et du rotor est identique. On peut alors par lecture successive des pôles Nord et Sud avoir la position exacte du rotor.

De préférence, la cible est une cible magnétique, de préférence agencée pour générer un champ magnétique s'étendant axialement sensiblement selon un axe de rotation de l'arbre de la machine électrique, et le capteur est sensible à ce champ magnétique.

La cible est avantageusement placée à une extrémité de l'arbre rotatif, par exemple la cible est placée sur un support qui est lui-même fixé est sur l'arbre moteur.

Dans un exemple de mise en oeuvre de l'invention, la machine électrique comporte une paroi notamment d'un carter, paroi pourvue d'une ouverture au droit de laquelle est placée la cible.

Le carter comporte avantageusement des ailettes de refroidissement, notamment agencées pour évacuer la chaleur de ladite paroi.

Dans un exemple de mise en oeuvre de l'invention, la cible s'étend au moins partiellement dans l'ouverture.

L'ouverture est traversante.

En variante, l'ouverture forme un logement pour la cible. Ce logement est avantageusement formé dans une paroi de la machine. Cette paroi est par exemple une plaque arrière de la machine électrique, à l'opposé par exemple du côté de la machine où se trouve une roue de compresseur. Cette plaque arrière est par exemple réalisée en matériau plastique ou métallique.

L'ouverture présente par exemple une forme circulaire.

L'ouverture est par exemple réalisée lors du moulage du carter. En variante, l'ouverture est réalisée par enlèvement de matière, notamment par usinage.

Avantageusement l'ouverture débouche sur la carte électronique.

Par exemple la carte électronique est disposée sur une face du carter, notamment une face extérieure du carter. La carte est par exemple collée ou vissée sur le carter.

L'ouverture de la paroi reçoit un organe d'étanchéité.

L'organe d'étanchéité est par exemple réalisé en plastique. En variante, cet organe d'étanchéité est réalisé en métal.

Avantageusement l'organe d'étanchéité est une pièce rapportée dans l'ouverture.

Par exemple l'organe d'étanchéité et la cible sont séparés par un espace d'air.

Dans un exemple de mise en oeuvre de l'invention, l'organe d'étanchéité et le capteur sont séparés par un espace d'air.

En variante, l'équipement est dépourvu d'organe d'étanchéité rapporté. Dans ce cas, l'étanchéité est réalisée par la paroi elle-même de la machine.

Dans un exemple de mise en oeuvre, le capteur et la cible sont respectivement de part et d'autre de la paroi.

Notamment, ladite paroi forme une séparation étanche entre le capteur et la cible. Par exemple, ladite paroi forme une séparation étanche entre le capteur et la cible, en elle-même ou en coopération avec un élément rapporté.

Dans un exemple de mise en oeuvre de l'invention, le capteur est monté sur une face de la carte électronique ou d'une carte de contrôle, face tournée vers l'ouverture.

La carte électronique comporte avantageusement une piste conductrice et le capteur est relié à cette piste, notamment par brasure.

Notamment l'unité de traitement de données est montée sur une face de la carte électronique, face opposée à celle qui reçoit le capteur.

La carte électronique comporte de préférence un raccord électrique pour raccorder électriquement le capteur et l'unité de traitement, ce raccord s'étendant dans l'épaisseur de la carte électronique entre les deux faces de la carte.

Le raccord s'étend par exemple dans un orifice de la carte. Ce raccord est encore appelé via.

De préférence le capteur s'étend au moins partiellement dans l'ouverture.

Par exemple la cible et le capteur sont disposés sensiblement coaxialement.

Le capteur est notamment un capteur à effet Hall.

Dans un exemple de mise en oeuvre de l'invention, la carte électronique s'étend sensiblement perpendiculairement à l'axe de l'arbre de la machine.

La carte électronique peut comporter, le cas échéant, un orifice traversant qui reçoit le capteur. Cet orifice peut notamment également recevoir le décrochement de la paroi. Une carte de contrôle peut être, si on le souhaite, posée sur la carte électronique. Avantageusement cette carte de contrôle porte le capteur, et cette carte de contrôle obture l'orifice de la carte électronique.

De préférence le capteur est fixé par brasure sur la carte électronique. Le capteur est en vis-à-vis de la cible magnétique avec un espace d'air (*air gap* en anglais) adéquat.

De préférence l'équipement forme un compresseur de suralimentation électrique de véhicule automobile.

Le compresseur peut comporter un canal de refroidissement agencé pour refroidir au moins un ensemble électronique comportant la carte électronique, ce canal recevant un liquide de refroidissement, par exemple de l'eau.

La machine est par exemple agencée en moteur.

Si on le souhaite, la machine peut être une machine à reluctance variable.

Ladite machine électrique est destinée à faire fonctionner le compresseur de sur-alimentation électrique de véhicule automobile par exemple.

Par exemple, ce compresseur (« electric supercharger » en anglais) vient en complément d'un turbocompresseur pour palier son temps de réponse (dû à son inertie et au temps nécessaire pour que les gaz d'échappement ait une énergie suffisante pour l'entrainer). Le compresseur fournit une suralimentation en quelques centaines de millisecondes jusqu'à ce que le turbocompresseur ait une vitesse suffisante pour prendre le relais. Le compresseur, si on le souhaite, peut agir de manière autonome.

A cet effet, le compresseur comprend une roue de compresseur. Le compresseur est disposé sur le conduit d'admission en amont ou en aval, de préférence en amont, du moteur thermique pour permettre de comprimer l'air d'admission afin d'optimiser le remplissage des cylindres du moteur thermique.

La machine électrique est activée pour entraîner la roue du compresseur afin de minimiser le temps de réponse en couple, notamment lors des phases transitoires à l'accélération, ou en phase de redémarrage automatique du moteur thermique après une mise en veille (fonctionnement « stop and start » en anglais).

La vitesse de rotation de ce type de machine électrique peut atteindre 70000 tours/min.

L'invention a également pour objet un compresseur de suralimentation électrique de véhicule automobile comportant une machine électrique équipée avec un équipement électrique tel que défini ci-dessus.

L'invention sera mieux comprise et d'autres détails, caractéristiques et avantages de l'invention apparaîtront à la lecture de la description suivante faite à titre d'exemple non limitatif en référence au dessin annexé dans lequel :

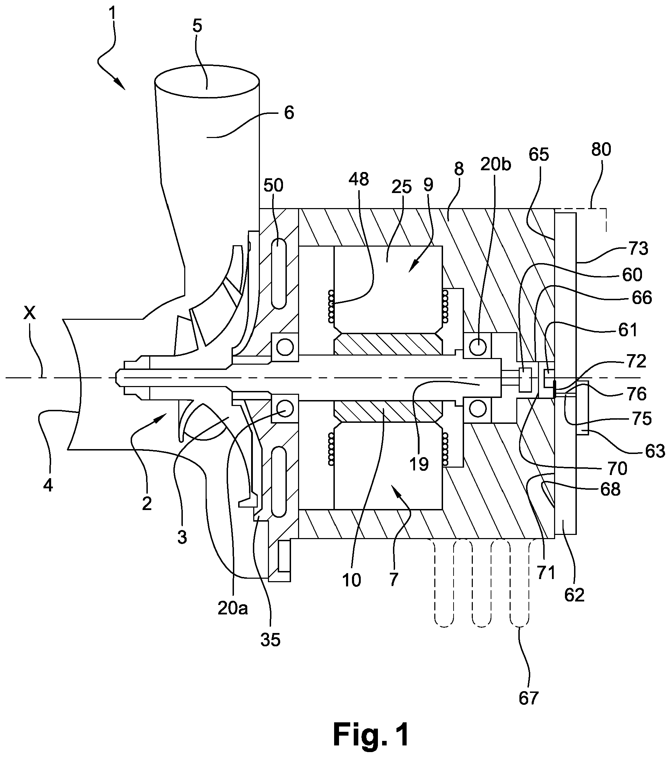

- la figure 1 représente, schématiquement et partiellement, en coupe, un équipement électrique électronique selon un exemple de réalisation de l'invention.

La figure 1 montre un compresseur de sur-alimentation électrique 1 comportant une roue 2 munie d'ailettes 3 apte à aspirer, via une entrée 4, de l'air non-comprimé issu d'une source d'air (non représentée) et à refouler de l'air comprimé via la sortie 5 après passage dans une volute 6. La sortie 5 peut être reliée à un répartiteur d'admission (non représenté) situé en amont du moteur à explosions du véhicule afin d'optimiser le remplissage des cylindres du moteur à combustion. En l'occurrence, l'aspiration de l'air est réalisée suivant une direction axiale, c'est-à-dire suivant l'axe X de la roue 2, et le refoulement est réalisé suivant une direction radiale sensiblement perpendiculaire à l'axe X de la roue 2.

La roue 2 est entraînée par une machine électrique 7 montée à l'intérieur du boitier ou carter 8. Cette machine électrique 7 comporte un stator 9, qui peut être polyphasé, entourant un rotor 10 avec présence d'un entrefer. Ce stator 9 est monté dans le carter 8. Le rotor 10 est solidaire d'un arbre 19 coopérant avec des roulements 20a et 20b. L'arbre 19 est lié en rotation avec la roue 2 ainsi qu'avec le rotor 10.

Le stator 9 comporte un corps 25 constitué par un empilage de tôles minces formant une couronne, encore appelé paquet de tôles 25, dont la face intérieure est pourvue d'encoches ouvertes vers l'intérieur pour recevoir des enroulements de phase qui froment un bobinage 48.

Le rotor 10 d'axe de rotation X est par exemple à aimants permanents. Le rotor 10 comporte un corps formé ici par un empilement de tôles. En variante, le rotor 10 peut être dépourvu d'aimants permanents.

Le boitier ou carter 8 est réalisé par moulage, notamment d'aluminium.

Le boitier 8 comporte un canal de refroidissement 50 pour le passage d'un fluide de refroidissement, notamment de l'eau.

Ce canal de refroidissement 50 s'étend au moins partiellement autour de l'arbre 19.

Le compresseur 1 comprend une paroi transversale 35 séparant la roue 2 de la machine électrique 7, cette paroi 35 comprenant le canal de refroidissement 50. Autrement dit cette paroi transversale est entre la roue et la machine électrique.

Cette paroi transversale 35 coopère avec le roulement 20a, notamment un roulement à billes, de l'arbre de la machine électrique.

Une cible 60 est montée sur l'arbre rotatif 19, cible qui est agencé pour interagir avec un capteur 61 pour délivrer une information relative à la position angulaire de l'arbre rotatif.

Le compresseur 1 comporte en outre une carte électronique 62 portant une unité de traitement de données 63, le capteur 61 étant monté sur cette carte 62 et relié électriquement à l'unité de traitement 63.

La cible 60 est une cible magnétique agencée pour générer un champ magnétique s'étendant axialement sensiblement selon l'axe X de rotation de l'arbre 19 de la machine électrique, et le capteur 61 est sensible à ce champ magnétique.

La cible 60 est placée à une extrémité de l'arbre rotatif 19.

Le carter 8 comporte une paroi 65 pourvue d'une ouverture 66 au droit de laquelle est placée la cible. Le carter 8 comporte des ailettes de refroidissement 67 agencées pour évacuer la chaleur de ladite paroi 65.

La cible 60 s'étend dans l'ouverture 66 qui est traversante et débouche sur la carte électronique 62.

L'ouverture 66 présente, dans l'exemple considéré, une forme circulaire et est est réalisée par usinage.

La carte électronique 62 est disposée sur une face extérieure 68 du carter.

L'ouverture 66 reçoit un organe d'étanchéité 70.

L'organe d'étanchéité 70 est, dans l'exemple décrit, réalisé en plastique et est une pièce rapportée dans l'ouverture. L'organe d'étanchéité 70 et la cible 60 sont séparés par un espace d'air.

L'organe d'étanchéité 70 et le capteur 61 sont de même séparés par un espace d'air.

Le capteur 61 est monté sur une face 71 de la carte électronique 62, face tournée vers l'ouverture 66.

La carte électronique 62 comporte une piste conductrice 72 et le capteur est relié à cette piste 72, par brasure.

L'unité de traitement de données 63 est montée sur une face 73 de la carte électronique, face 73 opposée à celle 71 qui reçoit le capteur 61.

La carte électronique 62 comporte un raccord électrique 75 pour raccorder électriquement le capteur 61 et l'unité de traitement 63, ce raccord s'étendant dans l'épaisseur de la carte électronique 62 entre les deux faces 71 et de la carte.

Le raccord 75 s'étend dans un orifice 76 de la carte 62. Ce raccord est encore appelé via.

Le capteur 61 s'étend dans l'ouverture 66.

La cible 60 et le capteur 61 sont disposés sensiblement coaxialement.

Le capteur peut être du type switch ou linéaire.

La carte électronique 62 s'étend sensiblement perpendiculairement à l'axe X de l'arbre de la machine.

La carte électronique 62 porte d'autres composants, tels que par exemple une ou plusieurs capacités.

Un capot 80 est monté sur le carter 8 pour protéger la carte électronique 62 et les composants qu'elle porte.

Dans l'exemple décrit, l'unité de traitement de données 63 est un micro processseur qui fait l'acquisition des informations capteur et qui calcule à partir des informations entrantes, la position du rotor.

La machine électrique 7 est activée pour entraîner la roue du compresseur afin de minimiser le temps de réponse en couple, notamment lors des phases transitoires à l'accélération, ou en phase de redémarrage automatique du moteur thermique après une mise en veille (fonctionnement « stop and start » en anglais).

La vitesse de rotation de ce type de machine électrique peut atteindre 70000 tours/min.

Bien entendu, l'invention n'est pas limitée à l'exemple qui vient d'être décrit.

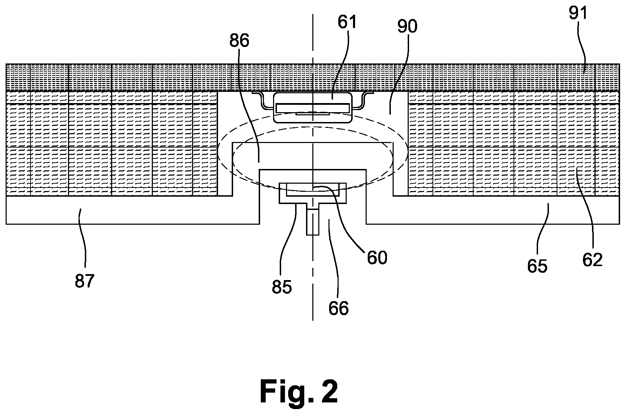

On a représenté sur la figure 2 un compresseur sensiblement similaire à celui décrit en figure 1 mais qui en diffère sur les aspects suivants.

Dans l'exemple de la figure 2, l'ouverture 66 est borgne et forme un logement pour la cible 60. La cible 60 est porté par un support 85 monté sur l'arbre 19.

Ce logement 66 est formé par un décrochement 86 de la paroi 65 de la machine. Cette paroi 65 est dans l'exemple décrit une plaque arrière 87 de la machine électrique, à l'opposé par exemple du côté de la machine où se trouve la roue de compresseur. Cette plaque arrière 87 est par exemple réalisée en matériau, notamment plastique ou métallique.

La carte électronique 62 comporte un orifice traversant 90 qui reçoit le capteur 61. Cet orifice 90 reçoit le décrochement 86 de la paroi. Une carte de contrôle 91 est posée sur la carte électronique 62. Cette carte de contrôle 91 porte le capteur 61, et cette carte de contrôle obture l'orifice 90 de la carte électronique.

## Revendications

1. Equipement électrique (1), notamment pour véhicule automobile, cet équipement électrique comportant :
- une machine électrique (7) comportant un arbre rotatif (19),
- une cible (60) montée sur l'arbre rotatif,
- un capteur (61) agencé pour interagir avec la cible notamment pour délivrer une information relative à la position angulaire de l'arbre rotatif,
- une carte électronique (62 ; 91) portant au moins une unité de traitement de données (63), le capteur étant monté sur cette carte et relié électriquement à l'unité de traitement.
dans lequel la machine électrique comporte une paroi (65) notamment d'un carter (8), paroi pourvue d'une ouverture (66) traversante au droit de laquelle est placée la cible,
caractérisé en ce l'ouverture reçoit un organe d'étanchéité (70), notamment réalisé en plastique, l'organe d'étanchéité étant une pièce rapportée dans l'ouverture.

2. Équipement électrique selon la revendication précédente, dans lequel la cible (60) est une cible magnétique, de préférence agencée pour générer un champ magnétique s'étendant axialement sensiblement selon un axe de rotation de l'arbre de la machine électrique, et le capteur est sensible à ce champ magnétique.

3. Équipement électrique selon l'une des revendications précédentes, dans lequel la cible est placée à une extrémité de l'arbre rotatif (19).

4. Équipement électrique selon l'une des revendications précédentes, dans lequel la cible s'étend au moins partiellement dans l'ouverture (66).

5. Équipement électrique selon l'une des revendications précédentes, dans lequel l'ouverture débouche sur la carte électronique (62).

6. Équipement électrique selon l'une des revendications précédentes dans lequel le capteur (61) et la cible (60) sont respectivement de part et d'autre de la paroi (65),

7. Équipement électrique selon l'une des revendications précédentes, dans lequel le capteur est monté sur une face de la carte électronique ou d'une carte de contrôle, face tournée vers l'ouverture (66).

8. Équipement électrique selon l'une des revendications précédentes, dans lequel la carte électronique comporte un raccord électrique (75) pour raccorder électriquement le capteur et l'unité de traitement, ce raccord s'étendant dans l'épaisseur de la carte électronique entre les deux faces de la carte.

9. Équipement électrique selon l'une des revendications précédentes, dans lequel la carte électronique s'étend sensiblement perpendiculairement à l'axe de l'arbre de la machine.

10. Equipement électrique selon l'une des revendications précédentes formant un compresseur de sur-alimentation électrique de véhicule automobile.

11. Équipement électrique selon la revendication précédente, dans lequel le compresseur comporte un canal de refroidissement (50) agencé pour refroidir au moins un ensemble électronique comportant la carte électronique, ce canal recevant un liquide de refroidissement, par exemple de l'eau.

## Patentansprüche

1. Elektrische Ausrüstung (1), insbesondere für ein Kraftfahrzeug, wobei diese elektrische Ausrüstung aufweist:
- eine elektrische Maschine (7), die eine Drehwelle (19) aufweist,
- ein auf die Drehwelle montiertes Ziel (60),
- einen Sensor (61), der eingerichtet ist, um mit dem Ziel zu interagieren, insbesondere, um eine Information bezüglich der Winkelstellung der Drehwelle zu liefern,
- eine Elektronikkarte (62; 91), die mindestens eine Datenverarbeitungseinheit (63) trägt, wobei der Sensor auf diese Karte montiert und elektrisch mit der Verarbeitungseinheit verbunden ist,
wobei die elektrische Maschine eine Wand (65) insbesondere eines Gehäuses (8) aufweist, wobei die Wand mit einer Durchgangsöffnung (66) versehen ist, der gegenüber das Ziel angeordnet ist,
**dadurch gekennzeichnet, dass** die Öffnung ein Dichtungsorgan (70), insbesondere aus Kunststoff, aufnimmt, wobei das Dichtungsorgan ein in die Öffnung eingesetztes Bauteil ist.

2. Elektrische Ausrüstung nach dem vorhergehenden Anspruch, wobei das Ziel (60) ein magnetisches Ziel ist, das vorzugsweise eingerichtet ist, um ein Magnetfeld zu erzeugen, das sich axial im Wesentlichen gemäß einer Drehachse der Welle der elektrischen Maschine erstreckt, und der Sensor auf dieses Magnetfeld anspricht.

3. Elektrische Ausrüstung nach einem der vorhergehenden Ansprüche, wobei das Ziel an einem Ende der Drehwelle (19) angeordnet ist.

4. Elektrische Ausrüstung nach einem der vorhergehenden Ansprüche, wobei das Ziel sich mindestens teilweise in der Öffnung (66) erstreckt.

5. Elektrische Ausrüstung nach einem der vorhergehenden Ansprüche, wobei die Öffnung an der Elektronikkarte (62) mündet.

6. Elektrische Ausrüstung nach einem der vorhergehenden Ansprüche, wobei der Sensor (61) und das Ziel (60) sich beiderseits der Wand (65) befinden.

7. Elektrische Ausrüstung nach einem der vorhergehenden Ansprüche, wobei der Sensor auf eine Seite der Elektronikkarte oder einer Kontrollkarte montiert ist, der Seite, die zur Öffnung (66) gerichtet ist.

8. Elektrische Ausrüstung nach einem der vorhergehenden Ansprüche, wobei die Elektronikkarte einen elektrischen Anschluss (75) aufweist, um den Sensor und die Verarbeitungseinheit elektrisch miteinander zu verbinden, wobei dieser Anschluss sich in der Dicke der Elektronikkarte zwischen den zwei Seiten der Karte erstreckt.

9. Elektrische Ausrüstung nach einem der vorhergehenden Ansprüche, wobei die Elektronikkarte sich im Wesentlichen lotrecht zur Achse der Welle der Maschine erstreckt.

10. Elektrische Ausrüstung nach einem der vorhergehenden Ansprüche, die einen elektrischen Auflader des Kraftfahrzeugs bildet.

11. Elektrische Ausrüstung nach dem vorhergehenden Anspruch, wobei der Lader einen Kühlkanal (50) aufweist, der eingerichtet ist, um mindestens eine Elektronikeinheit zu kühlen, die die Elektronikkarte aufweist, wobei dieser Kanal eine Kühlflüssigkeit, zum Beispiel Wasser, empfängt.

## Claims

1. Electrical device (1), in particular for a motor vehicle, this electrical device including:
- an electrical machine (7) including a rotary shaft (19),
- a target (60) mounted on the rotary shaft,
- a sensor (61) designed to interact with the target, in particular in order to deliver an item of information in relation to the angular position of the rotary shaft,
- an electronic board (62; 91) bearing at least one data-processing unit (63), the sensor being mounted on this board and linked electrically to the processing unit,
wherein the electrical machine includes a wall (65), in particular of a housing (8), which wall is provided with a through-aperture (66) to the right of which the target is positioned,
**characterized in that** the aperture receives a sealing element (70), in particular made of plastic, the sealing element being a part that is applied inside the aperture.

2. Electrical device according to the preceding claim, wherein the target (60) is a magnetic target, preferably designed to generate a magnetic field extending axially substantially along an axis of rotation of the shaft of the electrical machine, and the sensor is sensitive to this magnetic field.

3. Electrical device according to either of the preceding claims, wherein the target is positioned at an end of the rotary shaft (19).

4. Electrical device according to one of the preceding claims, wherein the target extends at least partly into the aperture (66).

5. Electrical device according to one of the preceding claims, wherein the aperture opens out onto the electronic board (62).

6. Electrical device according to one of the preceding claims, wherein the sensor (61) and the target (60) are respectively on either side of the wall (65).

7. Electrical device according to one of the preceding claims, wherein the sensor is mounted on a face of the electronic board or of a control board, which face is oriented towards the aperture (66).

8. Electrical device according to one of the preceding claims, wherein the electronic board includes an electrical connection (75) for electrically connecting the sensor and the processing unit, this connection extending into the thickness of the electronic board between the two faces of the board.

9. Electrical device according to one of the preceding claims, wherein the electronic board extends substantially perpendicular to the axis of the shaft of the machine.

10. Electrical device according to one of the preceding claims, forming an electrical charge air compressor for a motor vehicle.

11. Electrical device according to the preceding claim, wherein the compressor includes a cooling channel (50) designed to cool at least one electronic assembly including the electronic board, this channel receiving a liquid coolant, for example water.
